Europäisches Patentamt

European Patent Office

Office européen des brevets

(19)

(11) Publication number: **0 258 926**
**A1**

## (12) EUROPEAN PATENT APPLICATION

(21) Application number: 87201549.0

(51) Int. Cl.4: **F03D 1/06** , F03D 7/02

(22) Date of filing: 14.08.87

(30) Priority: 18.08.86 NL 8602097

(43) Date of publication of application:
**09.03.88 Bulletin 88/10**

(84) Designated Contracting States:
**BE DE ES FR GB GR IT NL SE**

(71) Applicant: STRIJENSE KUNSTSTOF
TECHNIEKEN B.V.
Industriestraat 4 P.O. Box 5727
NL-3290 AA Strijen(NL)

(72) Inventor: Struik, Marco
van Limburg Stirumlaan 02
NL-3299 AS Maasdam(NL)

(74) Representative: van der Beek, George Frans
et al
Nederlandsch Octrooibureau Johan de
Wittlaan 15 P.O. Box 29720
NL-2502 LS 's-Gravenhage(NL)

(54) **Wind turbine rotor with two rotor blades.**

(57) To be able to fasten a rotor with two blades to the shaft of a wind turbine in such a way that it has a torsional and bending freedom without expensive and complex features, a connecting structure (2) is used having a bending and twisting bar (3) which at both ends has a rigid connecting element (4) for connecting to a rotor blade (1); to transmit torsion from the part of the bar situated at one side of the hub to the part of the bar situated at the other side of the hub coupling means are used preferably comprising two rigid tubes (11), each extending round part of the bar (3) between a rigid connecting element (4) and a stop disc (7), the two tubes (11) being linked by a lever (19) which is hingedly fixed about the hub shaft.

fig-1

fig-2

EP 0 258 926 A1

## Wind turbine rotor with two rotor blades.

The invention relates to a wind turbine rotor with two rotor blades which are connected to each other by means of a connecting structure to be fitted on the turbine hub, and which in cross section have an aerodynamically shaped section with round nose and sharply tapering tail.

Known wind turbines have the disadvantages that the fastening structure by means of which the rotor is fixed on the hub has to be made rigid and heavy to enable it to take bending and torsional moments. An aerodynamic control of the blade angle, so that with increasing wind or speed the angles of incidence of the rotor blade become smaller, will be possible only with a complex design.

The object of the invention is to eliminate these disadvantages and produce a wind turbine rotor of the type mentioned in the preamble, which can be fastened to the wind turbine shaft in such a way that it has torsional and bending freedom without expensive and complex features.

The wind turbine rotor according to the invention is to this end characterized in that the connecting structure has a bending and twisting bar which at both ends has a rigid connecting element for connection to a rotor blade, and means are present to transmit torsion from the part of the bar situated at one side of the hub to the part of the bar situated at the other side of the hub.

The torsional freedom provides the possibility of controlling the blades of the rotor passively and through aerodynamic moments, in other words, with increasing wind or speed the rotor blades turn in such a way that the angle of incidence of the blades becomes smaller, with the result that speed and power remain limited to acceptable values. The coupling means serve to eliminate the asymmetrical effects of gravity and oblique flows; the blade angles always open simultaneously and have the same value.

The spring-suspended rotor blades can flap freely, but great deviations, in particular in the case of starting from standstill in heavy wind, can be prevented if stop elements are provided to limit the bending of the bar.

A relatively simple design of the coupling means comprises two rigid tubes, each extending round part of said bar between a rigid connecting element and a stop disc, the two tubes being linked by a lever which is fastened so that it pivots about the hub shaft.

Said stop elements can be integrated in the rotor through each tube having two internal ring flanges placed some distance apart, between which the peripheral edge of said stop disc falls.

In order to keep the blade angle under the governed speed and wind pressure constant, the aerodynamic moments must be counteracted by a pre-tensioning spring. It could be provided as a separate torsion spring on the turbine shaft, or in the form of steel blades in said tubes. It is, however, preferable for the spring-mounted pre-tensioning means to be integrated in the flexible bar.

Known, wooden, steel, glassfibre-reinforced plastic or aluminium rotor blades for wind turbines are relatively heavy and have an unfavourable weight distribution. In a rapidly turning wind turbine this leads to changing bending moments, resulting in the occurrence of fatigue damage due to gravity in the rotor blade. The heavier the rotor blade, the weightier the problem of the changing bending moments. The relatively great weight of the existing rotor blades for rapidly turning wind turbines is also a disadvantage because the blade is expensive and starts up slowly, while other parts of the turbine also have to be made heavier. The weight distribution must be such that instability such as flutter is prevented. For this, it is often necessary to add tip mass.

The above disadvantages are prevented if the rotor blade consists of the combination of a nose section which offers resistance to changing bending moments, and a tail of lightweight material fulfilling only an aerodynamic function.

The nose section takes care of the strength function of the rotor blade, while the lightweight tail has only a shape function. The weight of the blade is so low that, through more rapid response to gusts of wind, the efficiency of a wind turbine can be increased considerably, and a considerable saving can be made on capital investment costs for the parts of a turbine.

The nose section is a tubular section manufactured by extrusion of an aluminium alloy, or by winding or laminating glassfibre-reinforced synthetic resin.

On the front side, the tubes can be provided with a separate round nose piece of light material, but it is preferable for the tubular section to be D-shaped, so that the nose forms part of a sturdy nose section.

In the event of a rib reinforcement being provided in the D-shaped section, dividing the tube into two parts, heavy objects can be disposed in one of said tubes for balancing the rotor blade, and for permitting regulation of the weight distribution.

The lightweight tail can consist of glassfibre-reinforced polyester, thin aluminium sheets and the like, but it is preferable to use resin reinforced with aramide fabric. The tail is glued to the nose section in such a way that no elevations are formed.

In general, the transverse reinforcement in the tail is necessary, and it can consist of ribs which are disposed spaced apart, while another possibility is that the tail is filled up with PVC foam.

It is important that the combination of nose section and tail should be smooth, for which purpose a coat of gloss lacquer is applied.

The invention will now be explained in greater detail with reference to the figures, in which an example of an embodiment is shown.

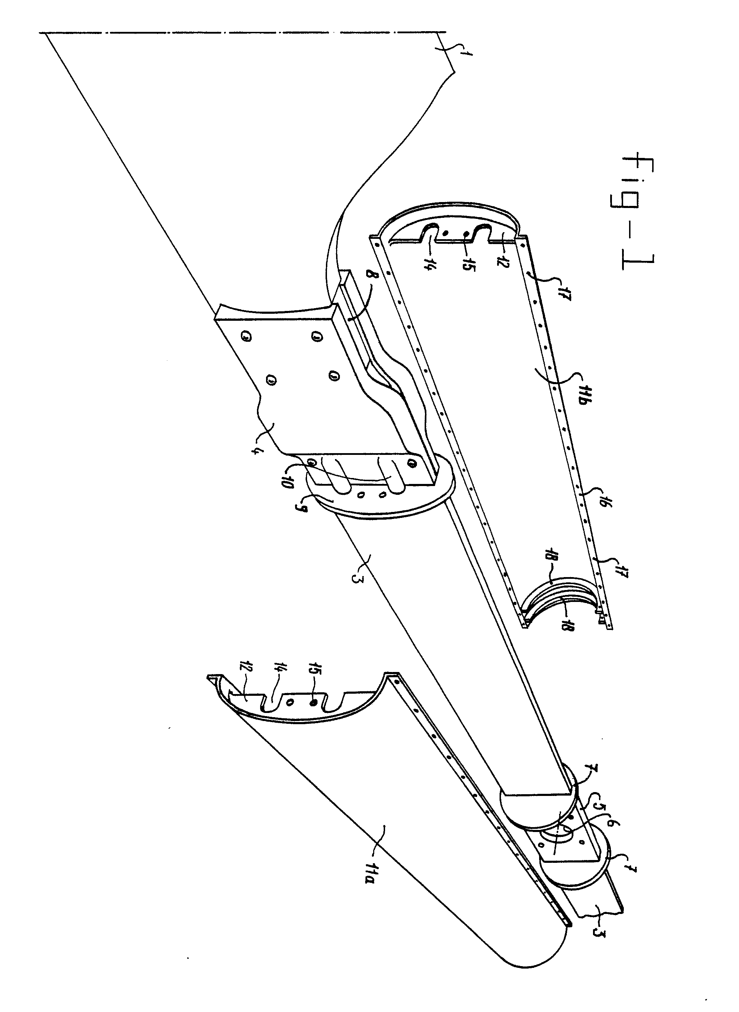

Fig. 1 shows a perspective view of a part of the rotor according to the invention, with some of the parts being shown in the dismantled state.

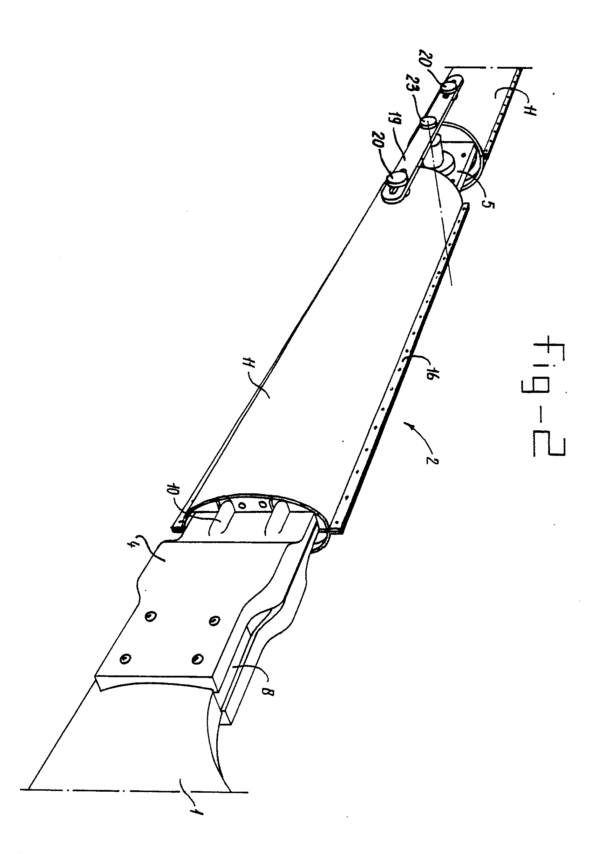

Fig. 2 shows another perspective view of the rotor according to Fig. 1, but now in the assembled state.

Fig. 3 shows a perspective view of a rotor blade. The wind turbine rotor shown has two rotor blades 1, which are connected to each other by a connecting structure 2, which permits the blades to twist and bend in the flap direction.

Said connecting structure 2 comprises a bending and twisting plate 3, which at two ends is fastened to a rigid casting 4 and in the middle has a reinforced part 5, in which a hub opening 6 is recessed.

Fastened on either side of the reinforced part 5 is a disc 7, which fulfils a stop function to be described in greater detail. The castings 4 also have a cavity, into which the root 8 of a rotor blade can be pushed and can be fixed, e.g. by bolts.

Each casting 4 has a disc 9 and a number of thickened parts 10. Fixed on the disc 9 are the halves 11a and 11b of a tube half, through a partition 12 being fixed to the disc 9 by means of bolts (not shown), and said thickened parts 10 falling into recess 14 of the partition 12. The openings in the disc 9 and the partition 12 through which the bolts are fed are indicated by 15.

In order to connect together the tube halves 11a and 11b to form a tube 11, they have flanges 16 with bolt holes 17.

The end of each tube 11 facing the reinforced part 5 is provided on the inside with ring flanges 18, which are spaced apart a little. In the assembled state of the tubes 11 each disc 7 is between two ring flanges 18. This design permits a torsional movement fully and a bending movement until the disc 7 strikes a ring flange 18. The design thus gives some play in the axial direction of the tube 11, which is necessary to permit bending of the plate 3.

Both tubes 11 are connected together by means of a lever 19, which at each end has slots through which hinge pins 20, 21 connected to a tube 11 project. This lever is hingedly connected in the middle to a shaft 23, whose centre line corresponds to the centre line of the rotor hub of the wind turbine which has been inserted into the opening 6. It will be clear that on torsion of one of the rotor blades 11 (sic) the appropriate tube 11 is turned through a certain angle, and this turning movement is transmitted via the lever 19 to the other tube 11 which thereby turns through the same angle in the opposite direction and twists the other rotor blade. In order to prevent blade twisting under the governed speed, a stop is provided on the hub against the lever 19.

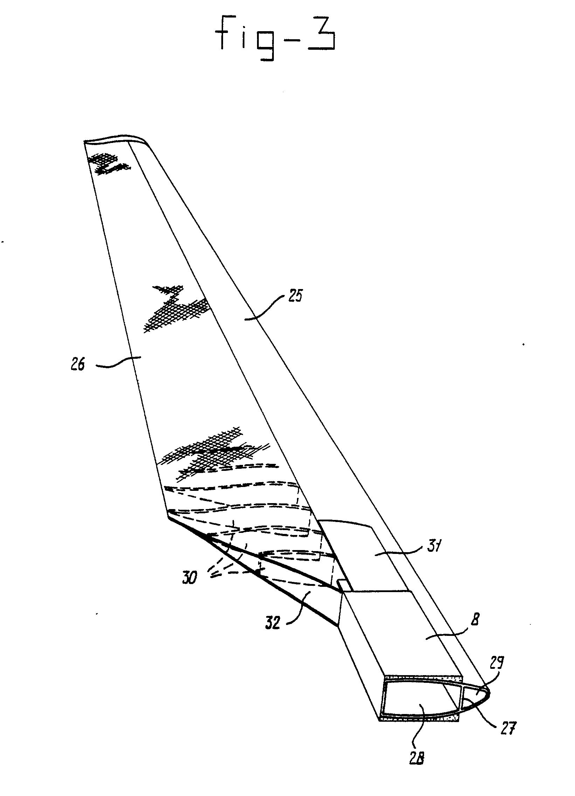

The design of the rotor blades is shown in Fig. 3. The shape in cross section is aerodynamic.

Each blade comprises a rigid D-shaped extruded nose section 25, made from a high-grade aluminium alloy, and glued thereto a tail 26 of lightweight material, in particular an epoxy resin reinforced with aramide (aromatic polyamide) fabric.

The twin-bladed wind turbine rotor according to the invention permits torsion and bending in the flap direction. Too great bending deformations in the flap direction of each rotor blade are, however, prevented through the disc 7 in question striking a ring flange 18.

The plate 3 is preferably a laminate of thin sheets of metal or plastic. A visco-elastic strip could be placed between the thin sheets to damp the torsional movement and give the plate 3 better dimensional stability. The torsion tube 11 of a rotor blade largely absorbs the bending moment of the rotor blade when the disc 7 strikes a ring flange 18, so that the effective bending strength is many times (e.g. four times) greater without the torsional rigidity of the flexible plate 3 being changed.

As a result of the torsional freedom, the rotor blades can be controlled passively through aerodynamic moments. In other words, the blades will exhibit a specific blade angle at a particular speed; with increasing aerodynamic moment (greater speed, increased wind), the blade angle will be greater, and thus the so-called angle of incidence will be smaller. The turbine adjusts. Of course, it is important here that the aerodynamic moment should be counteracted by torsional springing. In the example of the embodiment shown the torsion spring is integrated in the flexible plate 3, but it is possible to use a separate pre-tensioned torsion spring, e.g. in the form of a torsion spring wound round the hub, or in the form of steel blades in a tube.

If the tension of the torsion spring is made adjustable, the governed speed can be set.

The coupling of the two tubes 11 by means of the hinged lever 19 leads to compensation of adverse effects of oblique flow and gravity, in particular fatigue stresses. The moment is transmitted by means of torsion tubes 11 and the lever 19 from one rotor blade to the other rotor blade.

The low weight of the rotor blades leads to a rapid response in gusts of wind, an improvement of the efficiency of the turbine, and a relatively cheap construction.

By means of the tip weight 31, stability, rotor blade load and governing features can be favourably influenced.

Various modifications of the rotor shown are possible within the scope of the invention. The connection - consisting of disc 7 and ring flanges 18 - between tube 11 and plate 3 could be replaced by any pin-slot connecting structure; the design must be capable of permitting torsion and a relatively small axial movement, needed for bending.

## Claims

1. Wind turbine rotor with two rotor blades which are connected to each other by means of a connecting structure to be fitted on the turbine hub, and which in cross section have an aerodynamically shaped section with a round nose and sharply tapering tail, characterized in that the connecting structure (2) has a bending and twisting bar (3) which at both ends has a rigid connecting element (4) for connection to a rotor blade (1), and coupling means (11,19) are present to transmit torsion from the part of the bar situated at one side of the hub to the part of the bar situated at the other side of the hub.

2. Wind turbine rotor according to Claie 1, characterized by stop element (7, 11, 18) for limiting bending of the bar (3).

3. Wind turbine rotor according to Claim 1 or 2, characterized in that said coupling elements comprise two rigid tubes (11), each extending round part of said bar (3) between a rigid connecting element (4) and a stop disc (7), the two tubes (11) being linked by a lever (19) which is hingedly fixed about the hub shaft.

4. Wind turbine rotor according to Claim 3, characterized in that each tube (11) has two internal ring flanges (18) placed some distance apart, between which the peripheral edge of stop disc (7) falls.

5. Wind turbine rotor according to one of the preceding claims, characterized in that spring-mounted pre-tensioning means counteract the aerodynamically generated torsional moments.

6. Wind turbine rotor according to Claim 5, characterized in that the pre-tensioning means are integrated in the flexible bar (3).

7. Wind turbine rotor according to one of the preceding claims, characterized in that each rotor blade consists of a nose section (25) which offers resistance to changing bending moments, and a tail (26) of lightweight material which only fulfils an aerodynamic function.

8. Rotor blade according to Claim 7, characterized in that the nose section (25) is a tubular section manufactured by extrusion of an aluminium alloy, or by winding or laminating glassfibre-reinforced synthetic resin.

9. Wind turbine rotor according to Claim 8, characterized in that the tubular section (25) is D-shaped.

10. Wind turbine rotor according to Claim 9, characterized in that disposed in the D-shaped section (25) is a rib reinforcement (27), dividing the tube into two parts (28, 29).

11. Wind turbine rotor according to one of Claims 7-10, characterized in that the tail (26) consists of resin reinforced with aramide fabric.

12. Wind turbine rotor according to one of Claims 7-10, characterized in that the front part of the nose consists of resin reinforced with aramide fabric.

13. Wind turbine rotor according to one of the preceding Claims 7-12, characterized in that a cross reinforcement (30) is provided in the tail.

14. Wind turbine rotor according to Claim 13, characterized in that the cross reinforcement consists of a rib (30) disposed with spacing.

15. Wind turbine rotor according to Claim 13, characterized in that the tail is filled with PVC foam.

16. Wind turbine rotor according to one of Claims 7-15, characterized in that the combination of nose section and tail is provided with a coat of gloss lacquer.

Fig-2

# fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 345 876 (SCHWARZ) <br> * Abstract * <br> --- | 1 | F 03 D 1/06 <br> F 03 D 7/02 |
| A | NL-A-8 204 927 (HOLLAND WINDTURBINE) <br> * Claims * <br> ----- | 1 | |

TECHNICAL FIELDS SEARCHED (Int. Cl.4)

F 03 D

The present search report has been drawn up for all claims

| Place of search | Date of completion of the search | Examiner |
|---|---|---|
| THE HAGUE | 26-11-1987 | DE WINTER P.E.F. |